# EUROPÄISCHE PATENTSCHRIFT

(11) **EP 2 139 096 B1**
(45) Veröffentlichungstag und Bekanntmachung des Hinweises auf die Patenterteilung: **15.08.2018**
(21) Anmeldenummer: 09008318.9
(22) Anmeldetag: 25.06.2009
(51) Int. Cl.: H02K 5/22, H01R 13/20, H01R 24/00, H02K 7/116, H02K 11/38

(54) **Elektromotorischer Hilfsantrieb für Fahrzeuge**
Electric motor auxiliary drive for vehicles
Entraînement auxiliaire à moteur électrique pour véhicules

(30) Priorität: 27.06.2008 DE 102008030739
(43) Veröffentlichungstag der Anmeldung: 30.12.2009
(73) Patentinhaber: Valeo Systèmes d'Essuyage, 78322 Le Mesnil Saint Denis (FR)
(72) Erfinder: Stefani, Siegfried, 71739 Oberriexingen (DE)
(74) Vertreter: Patentanwälte Behrmann Wagner PartG mbB

(56) Entgegenhaltungen:
- DE-C2- 3 927 818
- FR-A1- 2 854 023
- NN: "BNC connector", Wikipedia , 13. Oktober 2006 (2006-10-13), XP002750921, Gefunden im Internet: URL:https://web.archive.org/web/2006101315 4841/http://en.wikipedia.org/wiki/BNC_conn ector [gefunden am 2015-11-16]

## Beschreibung

Die Erfindung bezieht sich auf einen elektromotorischen Hilfsantrieb gemäß Oberbegriff Patentanspruch 1. Derartige Hilfsantriebe werden unter anderem für den Antrieb von Scheibenwischeranlagen verwendet.

Elektromotorische Hilfsantriebe sind in unterschiedlichen Ausführungen bekannt, beispielsweise als Verstellantriebe für Fahrzeugsitze, als elektrische Antriebe für das Öffnen und Schließen von Fahrzeugscheiben sowie insbesondere auch als Antriebe (Scheibenwischermotore) für Scheibenwischanlagen von Fahrzeugen.

Die Verbindung des jeweiligen Hilfsantriebes, der z.B. aus einem Elektromotor sowie aus einem mit diesem verbundenen Getriebe, beispielsweise Schneckengetriebe besteht, mit fahrzeugseitigen elektrischen Versorgungsleitungen sowie ggs. auch mit fahrzeugseitigen elektrischen Steuerleitungen erfolgt grundsätzlich über einen elektrischen Anschlussstecker, der an der Außenseite des Gehäuses und dabei bevorzugt an der Außenseite des Getriebegehäuses oder eines Deckels dieses Getriebegehäuses angebracht ist. Der Anschlussstecker bildet dabei Steckerkontakte, über die mit einem passenden Gegenstecker die Verbindung zu den fahrzeugseitigen elektrischen Leitungen hergestellt wird, sowie auch interne Steckerkontakte, über die der Anschlussstecker mit gehäuseseitigen Kontakten verbunden ist, und zwar zur Herstellung der elektrischen Verbindung mit dem Elektromotor und/oder anderen Funktionselementen des Hilfsantriebes, beispielsweise mit einer Steuerelektronik usw.

Es ist hierbei üblich (FR 2 854 023 A1, DE 39 27 818 C2), den Anschlussstecker als gesondertes Bauteil auszubilden, welches mit geeigneten Mitteln, beispielsweise durch Verschrauben oder Verrasten an dem Gehäuse des elektromotorischen Hilfsantriebes befestigt wird, so dass der Anschlussstecker u.a. in Bezug auf die Belegung seiner äußeren Steckerkontakte, hinsichtlich seiner Formgebung und/oder Größe usw. den jeweiligen Erfordernissen und Wünschen von Kunden (Automobilherstellern) und/oder der jeweiligen Einbausituation des Hilfsantriebes anzupassen. Die mechanische Befestigung des Anschlusssteckers am Gehäuse des Hilfsantriebes erfolgt beispielsweise durch Verschrauben, Vernieten oder aber auch durch Verrasten (DE 39 27 818 C2), und zwar im letzten Fall konkret dadurch, dass das beispielsweise aus Kunststoff gefertigte Steckergehäuse des jeweiligen Anschlusssteckers mit Schnapphaken ausgebildet ist, die verrastend in Ausnehmungen am Gehäuse des Hilfsantriebes und dabei konkret an dem Getriebegehäuse bzw. an dem Gehäusedeckel einrasten. Vielfach ist insbesondere auch die elektrische Verbindung zwischen den internen Kontakten des Anschlusssteckers und den gehäuseseitigen Kontakten unbefriedigend, so dass ein Verschweißen oder Verlöten der Kontakte erforderlich ist.

Ein besonderes Problem besteht bei elektromotorischen Hilfsantrieben u.a. auch darin, dass der Übergang zwischen dem jeweiligen Anschlussstecker und dem Gehäuse oder Gehäuseteil des Hilfsantriebes hermetisch abgedichtet werden muss, um ein Eindringen, insbesondere von Feuchtigkeit und Wasser zu vermeiden, bei bekannten Hilfsantrieben aber in der Regel eine genau definierte Dichtkontur zwischen dem Anschlussstecker und dem Gehäuse nicht vorliegt, es also zu Undichtigkeiten kommen kann, was selbst durch Ausgießen mit Harz oder einem geeigneten Dichtungsmaterial nicht zuverlässig vermieden werden kann.

Nachteilig bei bekannten Hilfsantrieben ist weiterhin auch, dass bedingt durch die Anordnung der internen Steckerkontakte sowie der gehäuseseitigen Kontakte für den jeweiligen Anschlussstecker nur eine einzige Einbaulage mit einer einzigen, definierten Lage des die äußeren Steckerkontakte aufweisenden Abschnitts des Anschlusssteckers möglich ist, so dass für unterschiedliche Einbauumgebungen bzw. Einbaulagen oder -situationen unterschiedlich geformte Anschlussstecker erforderlich sind.

Aufgabe der Erfindung ist es, einen elektromotorischen Hilfsantrieb aufzuzeigen, der eine zuverlässige, zugleich aber auch vereinfachte elektrische sowie mechanische Verbindung des Anschlusssteckers mit dem Gehäuse des Hilfsantriebs, beispielsweise mit dem Getriebegehäuse oder einem Gehäusedeckel dieses Getriebegehäuses und/oder unterschiedliche Einbaulagen ein und desselben Anschlusssteckers ermöglicht.

Zur Lösung dieser Aufgabe ist ein elektromotorischer Hilfsantrieb entsprechend dem Patentanspruch 1 oder 3 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
Fig. 1 in perspektivischer Darstellung einen elektromotorischen Hilfsantrieb in Form eines Scheibenwischerantriebs mit von dem Getriebegehäuse bzw. dem Deckel des Getriebegehäuses abgenommenen Anschlussstecker;
Fig. 2 in einer perspektivischen Explosionsdarstellung den Anschlussstecker, den Deckel des Getriebegehäuses sowie weitere Funktionselemente des elektromotorischen Hilfsantriebs der Figur 1;
Fig. 3 eine Ansicht der Innenseite des Gehäusedeckels bei am Gehäusedeckel verrastetem Anschlussstecker;
Fig. 4 in Teildarstellung einen Schnitt durch den Gehäusedeckel und durch den an diesem Gehäusedeckel befestigten Steckersockel des Anschlusssteckers;
Fig. 5 in schematischer Darstellung die kreisförmige Anordnung der internen Steckerkontakte;
Fig. 6 in vergrößerter Teildarstellung eine Draufsicht auf die Innenseite des Gehäusedeckels im Bereich von elektrisch sowie mechanisch miteinander verbundenen Deckel- und Steckerkontakten;
Fig. 7 eine Draufsicht auf den Gehäusedeckel und den an diesem befestigten Anschlussstecker;
Fig. 8 eine Darstellung ähnlich Figur 2 bei einer weiteren Ausführungsform der Erfindung;
Fig. 9 eine Darstellung ähnlich Figur 3 bei der Ausführungsform der Figur 8;
Fig. 10 und 11 in vergrößerter Darstellung die Verbindung zwischen einem Gehäusekontakt und einem internen Steckerkontakt in einer Draufsicht auf die Innenseite des Gehäusedeckels sowie in einer Schnittdarstellung entsprechend der Linie I - I der Figur 10;
Fig. 12 und 13 in vergrößerter Darstellung die Verbindung zwischen einem Gehäusekontakt und einem internen Steckerkontakt in einer Draufsicht auf die Innenseite des Gehäusedeckels sowie in einer Schnittdarstellung entsprechend der Linie II - II der Figur 12;
Fig. 14 und 15 Darstellungen ähnlich den Figuren 8 und 9 bei einer weiteren Ausführungsform;
Fig. 16 und 17 in vergrößerter Darstellung eine Draufsicht auf die Innenseite des Gehäusedeckels im Bereich der Verbindung zwischen einem Deckelkontakt und einem internen Steckerkontakt bzw. einen Schnitt entsprechend der Linie III - III der Figur 16;
Fig. 18 und 19 Darstellungen ähnlich den Figuren 8 und 9 bei einer weiteren Ausführungsform;
Fig. 20 in vergrößerter Darstellung einen Teilschnitt durch den Gehäusedeckel sowie den Steckersockel im Bereich eines Deckelkontaktes und eines Steckerkontaktes vor dem Verbinden der Kontakte;
Fig. 21 eine gegenüber der Darstellung der Figur 20 um 90° gedrehte Schnittdarstellungen nach dem Verbinden des Steckerkontaktes mit dem Deckelkontakt.

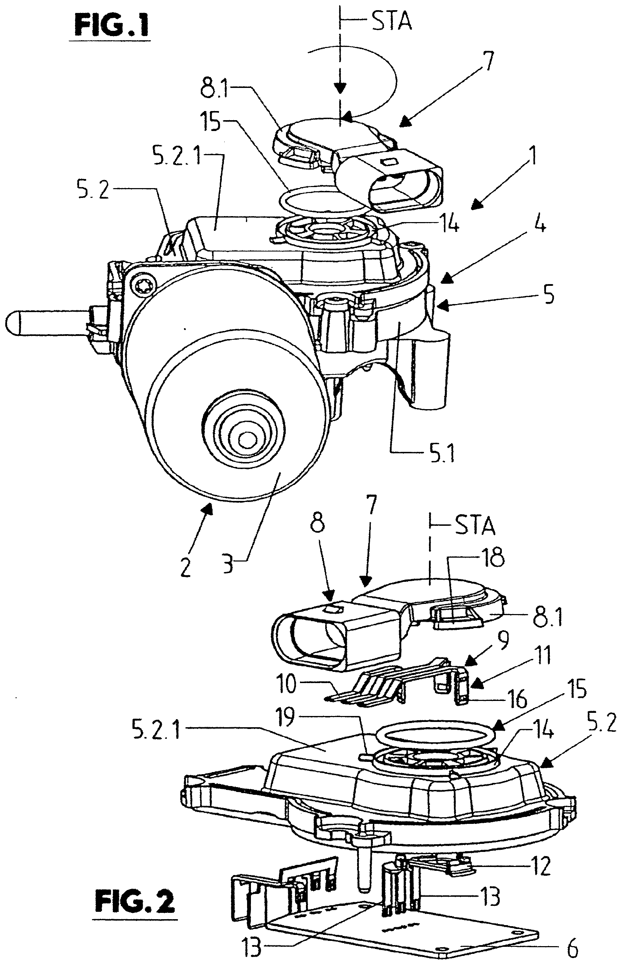

In den Figuren ist 1 ein elektromotorischer Hilfsantrieb, beispielsweise ein Scheibenwischerantrieb oder -motor, der in bekannter Weise einen Elektromotor 2 mit Motorgehäuse 3 und ein Getriebe 4, beispielsweise Schneckengetriebe mit an das Motorgehäuse 3 angeflanschtem Getriebegehäuse 5, umfasst. Das Getriebegehäuse 5 ist zweiteilig ausgebildet, und zwar bestehend aus dem Gehäuseteil 5.1, welcher ebenso wie das Motorgehäuse 3 aus Metall gefertigt ist sowie aus dem Gehäusedeckel 5.2, der zumindest in seinem in den Figuren 1 und 2 oberen Deckelabschnitt 5.2.1 als Formteil aus Kunststoff hergestellt ist.

Im Inneren des Getriebegehäuses 5 sind nicht nur die Funktionselemente des Getriebes aufgenommen, sondern auch die den Elektromotor 2 steuernde elektrische Steuereinrichtung oder Elektronik, von der in der Figur 2 lediglich die Platine 6 dargestellt ist. Zum Anschluss des Hilfsantriebes 1 an fahrzeugseitige elektrische Versorgungs- und Steuerleitungen ist ein Anschlussstecker 7 vorgesehen, der bei der dargestellten Ausführungsform im Wesentlichen aus einem aus Kunststoff hergestellten Steckergehäuse 8 und aus in diesem Gehäuse untergebrachten elektrischen Leitern 9 besteht, die an einem Ende leistenartige äußere Steckerkontakte 10 zum Anschluss an einen fahrzeugseitigen Stecker sowie an einem anderen Ende interne Steckerkontakte 11 bilden, über die in der nachstehend noch näher beschriebenen Weise eine elektrische, zugleich aber auch mechanische Verbindung mit dem Gehäusedeckel 5.2 bzw. mit dort vorhandenen Deckelkontakten 12 hergestellt wird.

Die Deckelkontakte 12 sind Bestandteil von gehäuseinternen elektrischen Leitern 13, welche die Steuerelektronik und/oder den Elektromotor 2 mit den Deckelkontakten 12 und damit auch mit den Steckerkontakten 10 bzw. 11 elektrisch verbinden. Die Leiter 9 und 13 bestehen jeweils aus einem für derartige Leiter geeigneten metallischen Matetrial.

Der Anschlussstecker 7 bzw. dessen Steckergehäuse 8 sind an dem mit dem Gehäusedeckel 5.2 zu verbindenden Bereich mit einem Steckersockel 8.1 ausgebildet, der haubenartig und an seiner im montierten Zustand dem Gehäusedeckel 5.2 benachbarten Seite offen ist. Mit dieser offenen Seite kann der Steckersockel 8.1 auf einem kreisringförmigen, an der Oberseite des Gehäusedeckels 5.2 ausgebildeten und über diese Oberseite vorstehenden Sockelabschnitt 14 aufgesetzt werden, so dass der Steckersockel 8.1 den Sockelabschnitt 14 vollständig umschließt. Durch eine von einem O-Ring gebildete Dichtung 15 ist der Übergang zwischen der Innenfläche des Steckersockels 8.1 und dem einstückig mit dem Gehäusedeckel 5.2 bzw. mit dem Abschnitt 5.2.1 hergestellten Sockelabschnitt 14 nach außen hin dicht verschlossen.

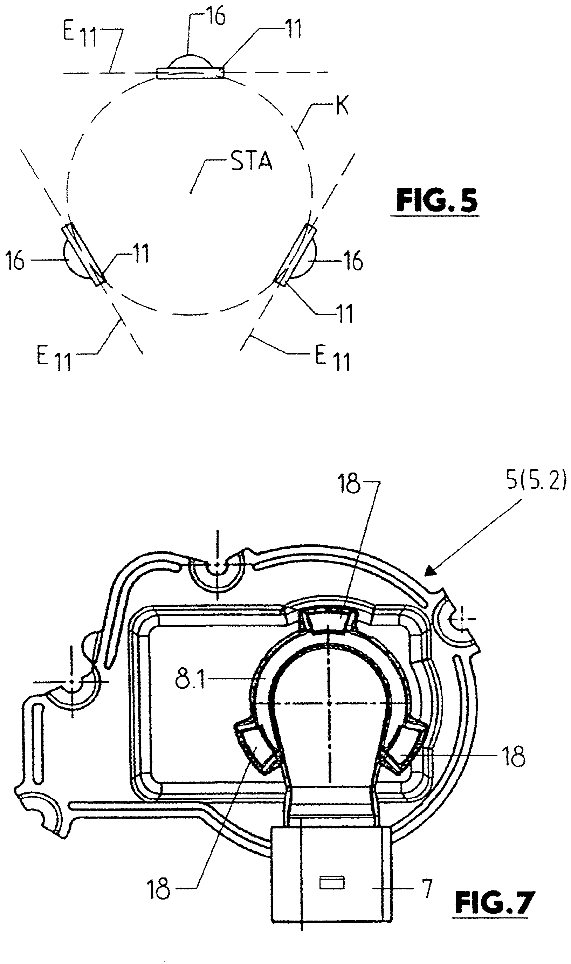

Die Steckerkontakte 11 des Anschlusssteckers 7 stehen über die offene Unterseite des Steckersockels 8.1 vor und sind in gleichmäßigen Winkelabständen um die Steckersockelachse STA der kreisringförmigen Öffnung des Steckersockels 8.1 verteilt angeordnet, und zwar bei der dargestellten Ausführungsform um jeweils 120° gegeneinander versetzt. Weiterhin weisen die Steckerkontakte 11 von dieser Achse jeweils denselben radialen Abstand auf. Bei der dargestellten Ausführungsform sind die Steckerkontakte 11 weiterhin jeweils flach, d.h. als flache Laschen ausgebildet und derart angeordnet, dass die Oberflächenseiten dieser Laschen jeweils in Ebenen parallel oder im Wesentlichen parallel zur Steckersockelachse STA liegen, wobei diese Ebenen zugleich auch tangential zu einer gedachten Kreislinie K um die Steckersockelachse STA orientiert sind, wie dies in der Figur 5 mit den Ebenen E 11 dargestellt ist. Jeder Steckerkontakt 11 ist zumindest im Bereich seines freien Endes mit einer durch Prägen oder auf andere geeignete Weise erzeugten Vorsprung oder Ausbuchtung 16 versehen.

Für jeden Steckerkontakt 11 ist in dem von dem Sockelabschnitt 14 umgebenen Bereich des Gehäusedeckels 5.2 eine Öffnung 17 vorgesehen, die sich kreissegmentförmig oder etwa kreissegmentförmig um die Achse des kreisringförmigen Sockelabschnittes 14 und damit bei montiertem Anschlussstecker 7 um die Steckersockelachse STA erstreckt. Die Anzahl der Öffnungen 17 ist bei der dargestellten Ausführungsform gleich der Anzahl der Steckerkontakte 11. Weiterhin sind die Öffnungen 17 in gleichmäßigen Winkelabständen um die Achse des Sockelabschnittes 14 bzw. um die Steckersockelachse STA verteilt vorgesehen und besitzen jeweils denselben Abstand von dieser Achse, d.h. bei insgesamt drei Öffnungen sind diese um 120° gegeneinander versetzt.

An der Innenseite des Gehäusedeckels 5.2 ist im Bereich jeder Öffnung 17 und deckungsgleich mit dieser ein Deckelkontakt 12 vorgesehen, und zwar u.a. mit einem Deckelkontaktabschnitt, der u.a. eine gekrümmte schlitzförmige Kontaktöffnung 12.1 bildet. Jede Öffnung 17 ist weiterhin mit einem Einführbereich 17.1 größerer Breite ausgebildet, dem am Deckelkontakt 12 beispielsweise ein entsprechender Einführbereich größerer Breite zugeordnet ist, der in die schlitzförmige Kontaktöffnung 12.1 übergeht.

Zum elektrischen sowie zugleich auch mechanischen Verbinden des Anschlusssteckers 7 mit dem Gehäusedeckel 5.2 wird der Anschlussstecker 7 mit seinem Steckersockel 8.1 auf den Gehäusedeckel 5.2 im Bereich des Sockelabschnittes 14 aufgesetzt und unter elastischer Verformung der Dichtung 15 gegen den Gehäusedeckel 5.2 angepresst. Die Steckerkontakte 11 werden dabei in den Einführbereich 17.1 der Öffnungen 17 soweit eingeführt, dass die Steckerkontakte 11 mit ihren die Ausbuchtungen 16 aufweisenden Enden über die Innenseite des Gehäusedeckels 2 vorstehen. Da die Einführbereiche 17.1 eine ausreichende Breite aufweisen, ist das Einführen der Steckerkontakte 11 mit den Ausbuchtungen 16 möglich. Im Anschluss daran wird der Anschlussstecker 7 um Steckersockelachse STA um einen kleinen Winkelbetrag gedreht oder geschwenkt, so dass die Steckerkontakte 11 in die jeweilige Kontaktöffnung 12.1 eines Deckelkontaktes 12 gelangen und mit ihren Ausbuchtungen 16 den jeweiligen Deckelkontakt 12 formschlüssig hintergreifen, also über die Steckerkontakte 11 eine bajonettartige Verriegelung des Anschlusssteckers 7 an dem Gehäusedeckel 2 erreicht ist.

Um eine zuverlässige elektrische Verbindung zwischen dem jeweiligen Steckerkontakt 11 und dem zugehörigen Deckelkontakt 12 zu erzielen ist jede schlitzförmige Kontaktöffnung 12 nicht nur ihrer Breite an die Dicke der laschenartigen Steckerkontakte 11 angepasst, sondern auch leicht gekrümmt, so dass der jeweilige in einer Kontaktöffnung 12.1 aufgenommene ursprünglich flache Steckerkontakt 11 elastisch verformt gegen die Randbereiche der Kontaktöffnung 12.1 mit definierter Verspannung gegen die Begrenzungsflächen der Kontaktöffnung 12 anliegt. Hierdurch werden eine dauerhafte Verspannung und Pressung zwischen dem Steckerkontakt 11 und dem zugehörigen Deckelkontakt 12 sowie daraus resultierend eine hohe Kontaktsicherheit erreicht. Der Dichtungsring 15 bleibt nach der Montage des Anschlusssteckers 7 unter Druck, so dass die Dichtefunktion der Dichtung 15 dauerhaft gewährleistet bleibt.

Für eine zusätzliche mechanische Verrasterung des Anschlusssteckers 7 an dem Gehäusedeckel 5.2 sind am Steckersockel 8.1 drei Schnapphaken 18 vorgesehen, die über den Umfang des Steckersockels 8.1 wegstehen und an Rastnasen 19 einrasten, die an der Außenfläche des Gehäusedeckels 5.2 angeformt sind.

Durch die beschriebene Verbindung zwischen dem Anschlussstecker 7 und dem Gehäusedeckel 5 ergeben sich zahlreiche Vorteile. So ist es nicht nur möglich, den Anschlussstecker 7 den jeweiligen Wünschen und Anforderungen von Kunden (Automobilherstellern) hinsichtlich Länge, Formgebung, Anordnung und Belegung der äußeren Steckerkontakte 10 usw. anzupassen, vielmehr werden durch die kreisförmige Anordnung der Steckerkontakte 11 und der zugehörigen Deckelkontakte 12 eine symmetrische Kraftverteilung und damit eine dauerhafte und stabile elektrische sowie auch mechanische Verbindung gewährleistet. Die Verbindung zwischen dem Anschlussstecker 7 und dem Gehäusedeckel 5.2 erfolgt in einfacher Weise durch eine bajonettartige Verriegelung, und zwar zwischen den Steckerkontakten 11 und den Deckelkontakten 12 und nicht ausschließlich zwischen Kunststoffteilen, was eine hohe Stabilität und gleichzeitig eine zuverlässige Kontaktierung gewährleistet. Die beschriebene Ausbildung stellt weiterhin eine nach außen dicht geschlossene Bauweise mit runder Dichtkontur sicher, wodurch für die Abdichtung zwischen dem Steckersockel und dem Gehäusedeckel 5.2 eine einfache Dichtung 15 in Form eines O-Rings oder einer angespritzten Dichtung oder Flüssigkeitsdichtung verwendet werden kann.

Durch die Anordnung der Steckerkontakte 11, der zugehörigen Deckelkontakte 12 sowie der Öffnungen 17 sind unterschiedliche Positionen für den Anschlussstecker 7 möglich. Mit einer einzigen Steckersockelgeometrie können mehrere Einbaulagen für den Anschlussstecker 7 bzw. für den elektromotorischen Hilfsantrieb 1 in einem Fahrzeug bedient werden. Bei einer dreipoligen Ausbildung des Anschlusssteckers 7, wie sie vorstehend beschrieben wurde, ergeben sich insgesamt drei unterschiedliche Möglichkeiten für die Orientierung des Anschlusssteckers 7 am Getriebegehäuse 5. Bei einer vierpoligen Ausbildung des Anschlusssteckers 7 mit wenigstens vier Steckerkontakten 11 ergeben sich bereits vier unterschiedliche Möglichkeiten für die Orientierung des mit dem Getriebegehäuse verbundenen Anschlusssteckers 7. Grundsätzlich besteht dabei auch die Möglichkeit, die Deckelkontakte jeweils mehrfach vorzusehen oder jeden Deckelkontakt 12 mit wenigstens zwei um die Achse des kreisringförmigen Sockelabschnitts 4 gegeneinander versetzten Kontaktöffnungen 12.1 auszubilden, so dass sich dann durch wahlweise Verwendung der einen oder der anderen Kontaktöffnung der Deckelkontakte 12 weitere Möglichkeiten für eine Befestigung des Anschlusssteckers 7 in unterschiedlichen Orientierungen ergeben.

Insgesamt bietet also die beschriebene Verbindung des Anschlusssteckers 7 mit dem Gehäusedeckel 5.2 den Vorteil, dass nicht für jede Anwendung ein spezieller Anschlussstecker 7 erforderlich ist, sondern es mit nur wenigen unterschiedlichen Typen von Anschlusssteckern 7 möglich ist, Kundenwünschen oder -erfordernissen voll gerecht zu werden. So ist es beispielsweise mit zwei Anschlusssteckern 7 unterschiedlicher Ausbildung, beispielsweise mit unterschiedlicher Länge möglich, bei einer dreipoligen Ausbildung des Anschlusssteckers 7 sechs unterschiedliche Lagen für den die äußeren Steckerkontakte 10 aufweisenden Teil des Anschlusssteckers 7 zu erreichen, bei einer vierpoligen Ausbildung des Anschlusssteckers 7 sogar insgesamt zwölf unterschiedliche Lagen.

Die erfindungsgemäße Ausbildung kann somit der Aufwand an Lagerhaltung und Bereitstellung unterschiedlicher Hilfsantriebe und/oder unterschiedlicher Anschlussstecker 7 erheblich reduziert werden.

Weiterhin wird mit der erfindungsgemäßen Ausbildung auch die Flexibilität in der Fertigung des Hilfsantriebes 1 wesentlich erhöht, d.h. es besteht die Möglichkeit, die Hilfsantriebe 1 zunächst ohne den jeweiligen Anschlussstecker 7 zu fertigen und erst am Ende der Fertigung den jeweiligen Hilfsantrieb 1 mit den auf die Wünsche und/oder Erfordernisse des Kunden angepassten Anschlussstecker 7 in der ebenfalls kundenspezifischen Orientierung zu versehen. Neben einer drastischen Reduzierung des Aufwandes bei Lagerhaltung und Bereitstellung ermöglicht die erfindungsgemäße Ausbildung auch eine drastische Reduzierung der Entwicklungszeiten und -kosten, und zwar u.a. auch durch die Möglichkeit jeweils einen bereits produzierten Hilfsantrieb 1 auch unterschiedlicher Bauart, beispielsweise mit Steuerelektronik oder aber ohne Steuerelektronik, mit einem an die Kundenwünsche oder -erfordernisse angepassten Anschlussstecker 7 zu versehen usw.

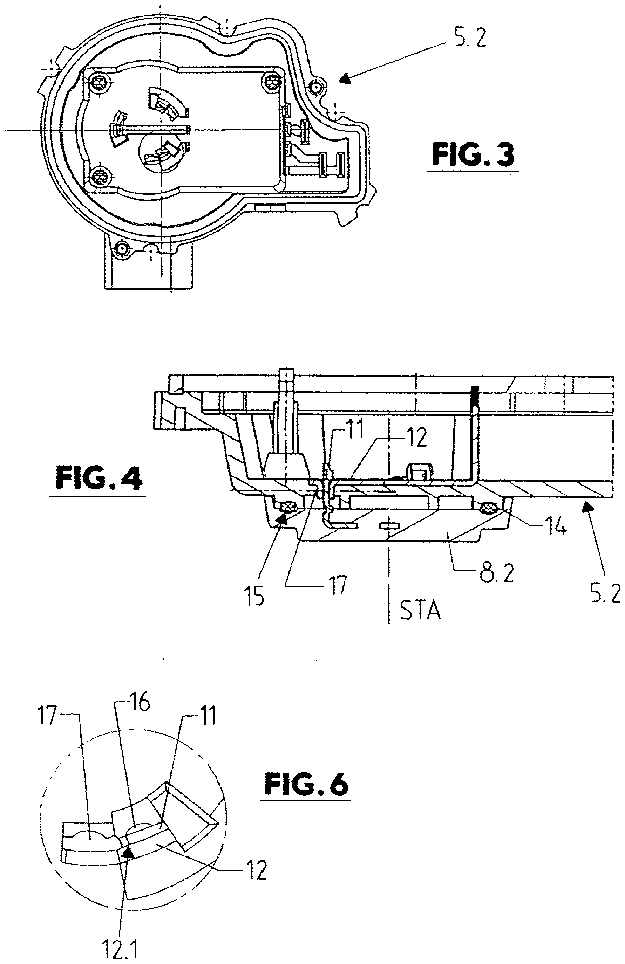

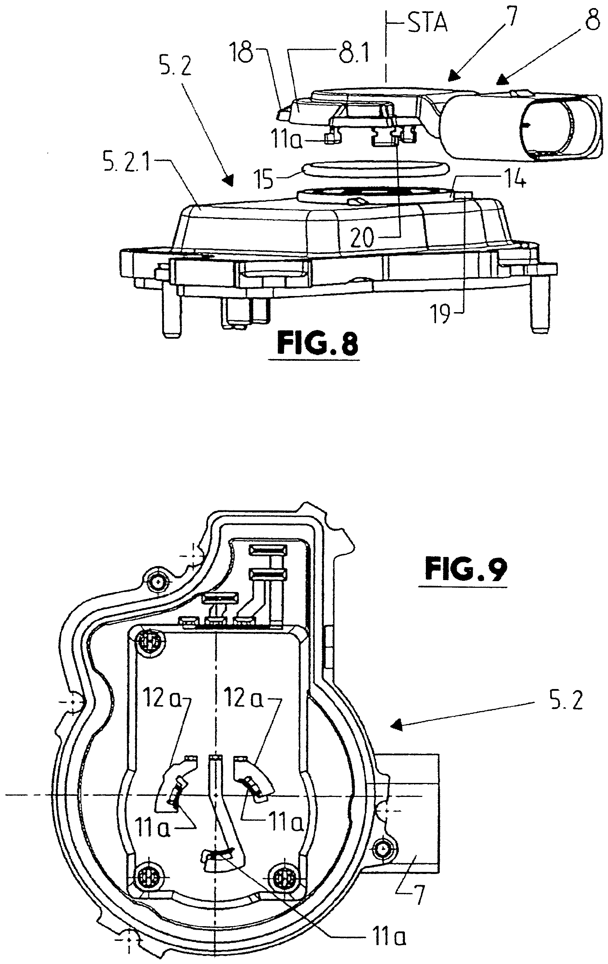

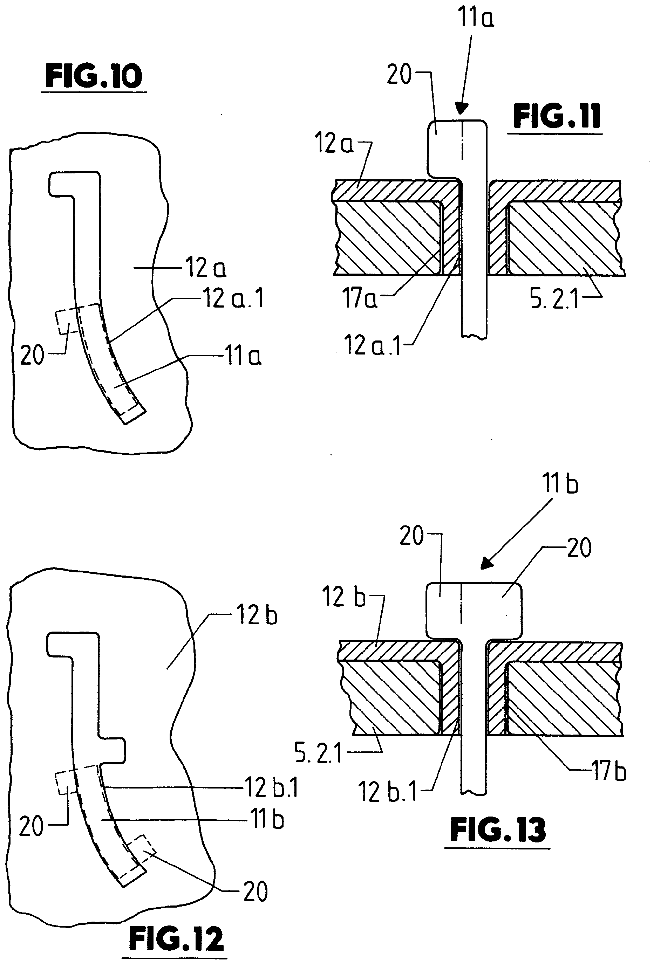

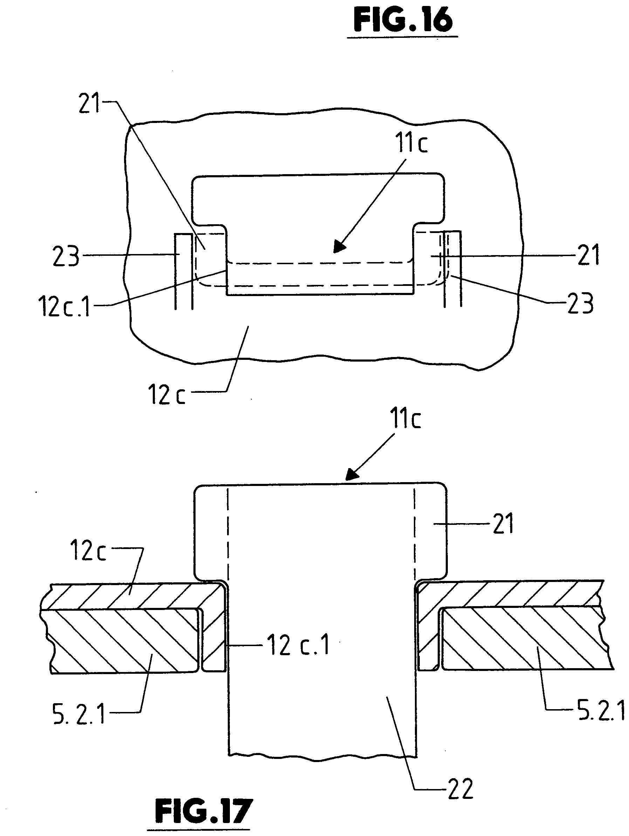

Die Figuren 8 - 17 zeigen Ausführungsformen, die die vorgenannten Vorteile ebenfalls aufweisen. Die Ausführungsform der Figuren 8 - 11 unterscheidet sich von der Ausführungsform der Figuren 1 - 7 im Wesentlichen nur durch eine unterschiedliche Ausbildung der Steckerkontakte 11a und der zugehörigen Deckelkontakte 12a sowie der Öffnungen 17a. Die Steckerkontakte 11a sind bei dieser Ausführungsform nicht als flache Laschen ausgebildet, sondern an ihrem freien Ende jeweils mit einer Abwinklung 20 versehen, mit der die formschlüssige bajonettartige Verbindung zwischen dem Steckerkontakt 11a und dem zugehörigen Deckelkontakt 12a erreicht wird. Die Öffnungen 17a besitzen jeweils einen an diese abgewinkelte Form der Steckerkontakte 11a angepassten Einführbereich über den jeder Steckerkontakt 11a so eingeführt werden kann, dass er mit dem die Abwinklung 20 aufweisenden Ende über die Innenseite des Gehäusedeckels 5.2 bzw. über die dortige Fläche des zugehörigen Deckelkontaktes 12a vorsteht. Durch Schwenken des Anschlusssteckers 7 relativ zum Getriebegehäuse 5 erfolgt wiederum das bajonettverschlussartige Verriegeln des Anschlusssteckers 7 in der Weise, dass jede Abwinklung 20 dann bei in die Kontaktöffnung 12.1 eingeführtem Steckerkontakt 12a diesen Steckerkontakt formschlüssig hintergreift, wie dies in der Figur 11 angedeutet ist. Auch bei dieser Ausführungsform ist die jeweilige schlitzförmige Kontaktöffnung 12.1 wiederum in ihrer Breite an die Breite des Steckerkontaktes 11a angepasst und zugleich kreissegmentartig gekrümmt, so dass durch Spannen bzw. bleibende elastische Verformung eine elektrische Verbindung mit hoher Kontaktsicherheit zwischen dem Steckerkontakt 11a und dem zugehörigen Deckelkontakt 12a hergestellt ist.

Die Figuren 12 und 13 zeigen als weitere Variante eine Ausführungsform, bei der die Steckerkontakte 11b jeweils an zwei einander abgewandten Randbereichen mit einer Abwinklung 20 versehen sind, und zwar derart, dass sich für den jeweiligen Steckerkontakt 11b eine in etwa S-förmige Formgebung ergibt. Die Öffnung 17b sind an ihrem Einführbereich an diese Formgebung angepasst. Nach dem bajonettverschlussartigen Verriegeln des Anschlusssteckers 7 am Gehäusedeckel 5 ist der jeweilige Steckerkontakt 11b wiederum in der gekrümmten Kontaktöffnung 12.1 unter elastischer Verformung aufgenommen. Die beiden Abwinklungen 20 hintergreifen dabei formschlüssig den jeweiligen Deckelkontakt 12b an der Innenseite des Gehäusedeckels 5.2.

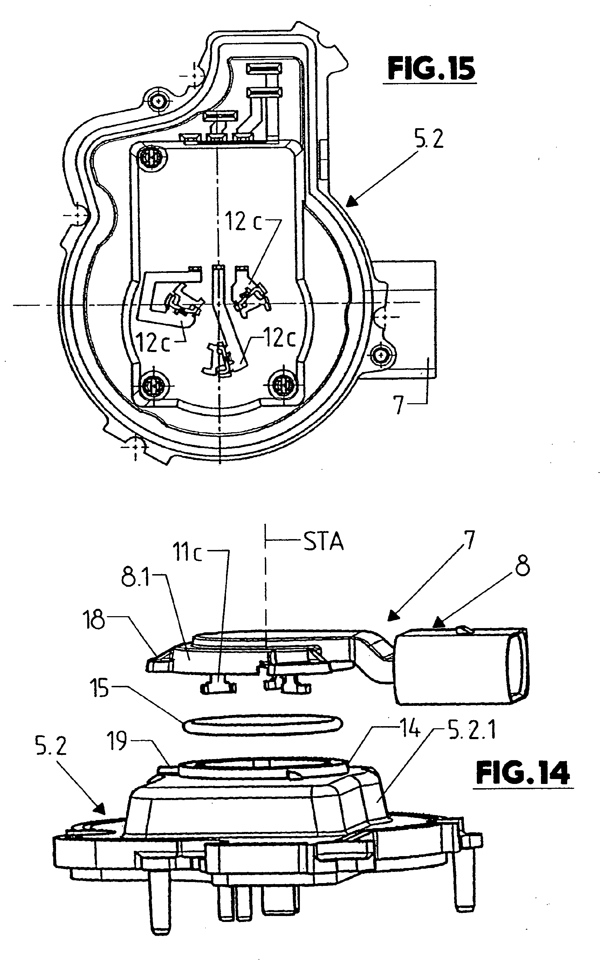

Die Figuren 14 - 17 zeigen eine weitere Ausführungsform, die sich von der Ausführungsform der Figuren 1 - 7 wiederum lediglich durch die Ausbildung der Steckerkontakte 11c und die hieran angepasste Ausbildung der Deckelkontakte 12c und der Öffnungen 17c unterscheidet. Bei dieser Ausführungsform sind die Steckerkontakte 11c mit den Ebenen ihrer größeren Oberflächenseite nicht tangential, sondern senkrecht zu der Kreislinie K der Figur 5 orientiert, auf der die Steckerkontakte 11c angeordnet sind. Weiterhin sind die Steckerkontakte 11c jeweils an zwei einander gegenüberliegenden Seiten mit je einer Abwinklung 21 versehen. Die beiden Abwinklungen 21 stehen jeweils über eine gemeinsame Seite der Steckerkontakte 11c weg. An die Abwinklungen 21 anschließend sind die Steckerkontakte 11c jeweils mit einem Abschnitt 22 reduzierter Breite ausgebildet. Der Formgebung der Steckerkontakte 11c entsprechend sind auch die Öffnungen 17c ausgebildet.

Die Kontaktöffnungen 12c.1 der Deckelkontakte 12c besitzen jeweils eine Breite, die in etwa gleich der Breite des Abschnittes 22 ist. Beim Verbinden des Anschlusssteckers 7 werden die Steckerkontakte 11c in die Öffnungen 17c eingesetzt. Durch Schwenken des Anschlusssteckers 7 gegenüber dem Gehäusedeckel 5.2 erfolgt wiederum das bajonettartige Verriegeln, und zwar dadurch, dass sich die Steckerkontakte 11c mit ihren Abschnitten 22 in die jeweiligen Kontaktöffnung 12c.1 hinein bewegen und die mit den Abwinklungen 21 versehenen Abschnitte größerer Breite der Steckerkontakte 11c den zugehörigen Deckelkontakt 12c an den Rändern seiner Kontaktöffnung 12c.1 hintergreifen. Für eine zuverlässige elektrische Verbindung sind die Deckelkontakte 12c zusätzlich mit Kontaktflächen 23 versehen, die gegen die Außenflächen der Abwinklungen 21 und/oder gegen die Fläche des jeweiligen Steckerkontaktes 11c im Bereich zwischen diesen Abwinklungen angepresst anliegen.

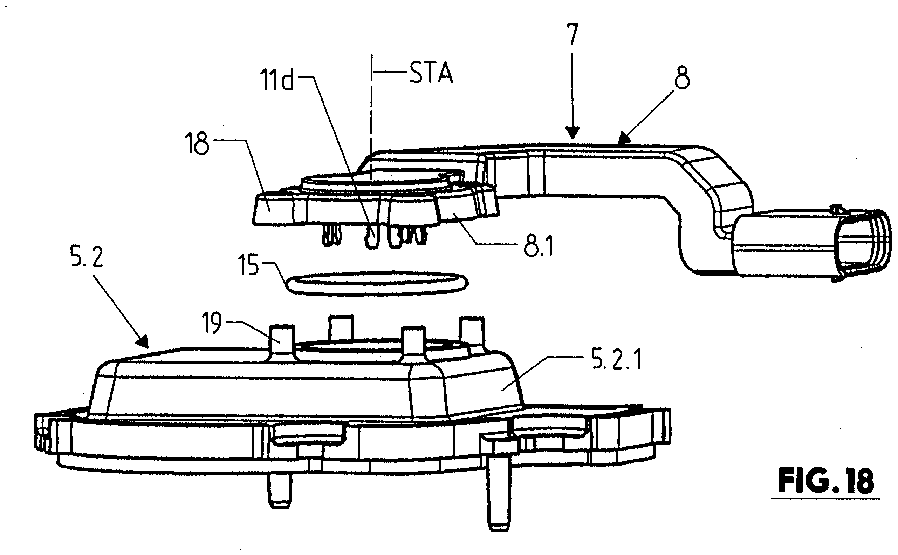

Während bei den im Zusammenhang mit den Figuren 1 - 17 beschriebenen Ausführungsformen der Anschlussstecker 7 durch eine bajonettartige Verriegelung seiner Steckerkontakte 11, 11a, 11b, 11c mit den Deckelkontakten 12, 12a, 12b, 12c am Gehäusedeckel 5.2 montiert wird und dies auch bei bereits geschlossenem Getriebegehäuse 5 möglich ist, zeigen die Figuren 18 - 21 eine Ausführungsform, bei der die formschlüssige Verbindung der dortigen Steckerkontakte 11d mit den zugehörigen Deckelkontakten 12d durch Verformen bzw. Biegen der Deckelkontakte bei noch nicht montiertem Gehäusedeckel 5.2 erfolgt. Die Steckerkontakte 11d und Deckelkontakte 12d sind wiederum in derselben Weise relativ zueinander angeordnet, wie dies u.a. für die Steckerkontakte 11 und Steckerkontakte 12 beschrieben wurde.

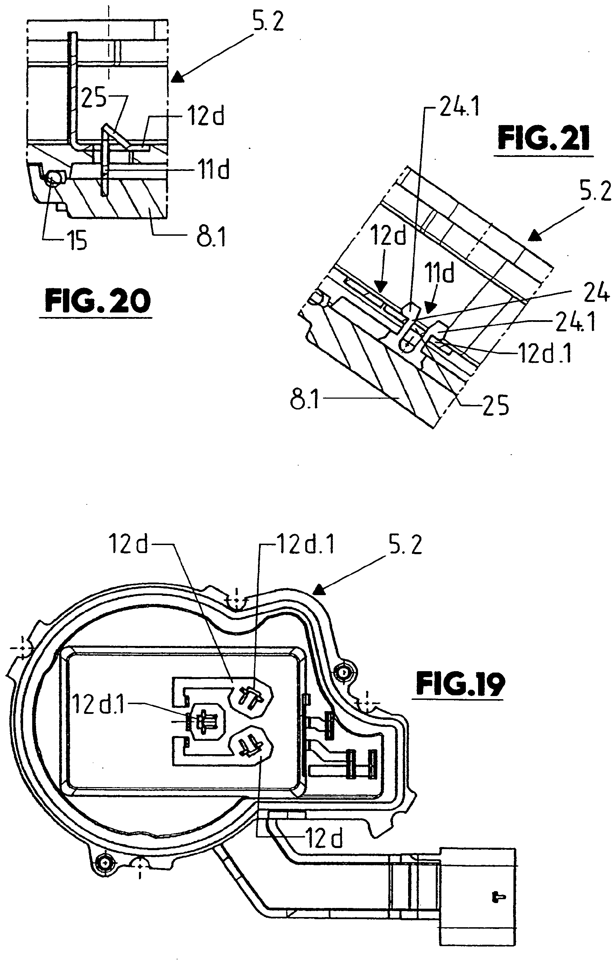

Wie insbesondere die Figuren 20 und 21 zeigen, sind die Steckerkontakte 11d jeweils mit zwei flachen bzw. laschenartigen Schenkeln 24 ausgebildet, die mit ihren Oberflächenseiten in gemeinsamen Ebenen liegen und an dem freien Ende jeweils mit einem Vorsprung bzw. einer Erweiterung 24.1 versehen sind, und zwar derart, dass jede Erweiterung 24.1 über die dem anderen Schenkel abgewandte Seite des zugehörigen Schenkels 24 wegsteht. Der zugehörige Deckelkontakt 12d ist mit einer schlitzförmigen Kontaktöffnung 12d.1 versehen, in die der jeweilige Sockelkontakt 11d einführbar ist, und zwar derart, dass die beiden Erweiterungen 24.1 jeweils an einem Ende der schlitzförmigen Kontaktöffnung 12d.1 an der Innenseite des Gehäusedeckels 5.2 hinter dem Deckelkontakt 12d einrasten. Der Deckelkontakt 12d ist weiterhin mit einer verformbaren Lasche 25 ausgebildet, die bei noch nicht verbundenem Steckerkontakt 11d und Deckelkontakt 12d schräg von dem in einer Ebene mit der Innenseite des Gehäusedeckels 5.2 liegenden Abschnitt des Deckelkontaktes 12d wegsteht. Zum endgültigen Verbinden des jeweiligen Steckerkontaktes 11d mit dem Deckelkontakt 12d wird die Lasche 25 in den Zwischenraum zwischen den beiden Schenkeln 24 des betreffenden Steckerkontaktes 11d hinein gebogen, so dass diese Schenkel durch die Lasche 24 auseinander bewegt und gegen die Enden der Kontaktöffnung 12d.1 angepresst werden.

Auch bei dieser Ausführungsform erfolgt das Verbinden des Anschlusssteckers 7 mit dem Getriebegehäuse 5 formschlüssig über die Steckerkontakte 11d und Deckelkontakte 12d. Durch die beim Aufsetzen des Anschlusssteckers 7 bzw. des Steckersockels 8.1 auf den Gehäusedeckel 5.2 wird wiederum die Dichtung 15 elastisch verformt, so dass der dichte Abschluss zwischen dem Anschlussstecker 7 und dem Gehäusedeckel 5.2 gewährleistet ist. Der Anschlussstecker 7 kann den Kundenwünschen oder -Anforderungen entsprechend in unterschiedlicher Orientierung am Gehäusedeckel 5.2 befestigt werden, so dass die Ausführungsform der Figuren 18 - 21 grundsätzlich die selben Vorteile aufweist, wie sie vorstehend für die Ausführungsformen der Figuren 1 - 17 angegeben wurden.
Die Steckerkontakte 11, 11a - 11d und die gehäuseseitigen Kontakte 12, 12a - 12d sind einstückig mit ihren Leitern 9 und 13 aus einem metallischen Flachmaterial gefertigt.
Die Erfindung wurde voranstehend an Ausführungsbeispielen beschrieben. Es versteht sich, dass zahlreiche Änderungen sowie Abwandlungen nach dem Gegenstand der Ansprüche möglich sind, ohne dass dadurch der der Erfindung zugrunde liegende Erfindungsgedanke verlassen wird.

### Bezugszeichenliste

- 1: elektromotorischer Hilfsantrieb
- 2: Elektromotor
- 3: Motorgehäuse
- 4: Getriebe
- 5: Getriebegehäuse
- 5.1: Gehäuseteil
- 5.2: Gehäusedeckel
- 5.2.1: Abschnitt des Gehäusedeckels
- 6: Platine
- 7: Anschlussstecker
- 8: Steckergehäuse
- 8.1: Steckersockel
- 9: Leiter
- 10: äußerer Steckerkontakt
- 11, 11a, 11b, 11c, 11d: innerer Steckerkontakt
- 12, 12a, 12b, 12c, 12d: Deckelkontakt
- 12.1, 12a.1 - 12d.1: Kontaktöffnung
- 13: Leiter
- 14: Sockelabschnitt am Gehäusedeckel 5.2
- 15: Dichtung
- 16: Ausbuchtung
- 17, 17a - 17d: Öffnung
- 18: Schnapphaken
- 19: Rast
- 20, 21: Abwinklung
- 22: Abschnitt
- 23: Kontaktfläche
- 24: Schenkel
- 25: Lasche
- K: Kreislinie
- E11: Ebene
- STA: Steckersockelachse

## Patentansprüche

1. Elektromotorischer Hilfsantrieb für Fahrzeuge mit einem an einem Gehäuse (5) des Hilfsantriebs befestigten elektrischen Anschlussstecker (7) mit äußeren Steckerkontakten (10) sowie mit inneren Steckerkontakten (11, 11a - 11d) zum Anschließen an gehäuseseitige elektrische Kontakte (12, 12a - 12d), sowie mit Mitteln zum formschlüssigen Verbinden des Anschlusssteckers (7) mit dem Gehäuse (5),
**dadurch gekennzeichnet,**
**dass** die Mittel zum formschlüssigen Verbinden des Anschlusssteckers (7) von den inneren Steckerkontakten (11, 11a - 11d) im Zusammenwirken mit den gehäuseseitigen Kontakten (12, 12a - 12d) im Bereich einer bajonettartigen Verriegelung des Anschlusssteckers (7) an einem Gehäusedeckel (5.2) gebildet sind.

2. Elektromotorischer Hilfsantrieb nach Anspruch 1, **dadurch gekennzeichnet,**
**dass** die inneren Steckerkontakte (11, 11a - 11d) des Anschlusssteckers (7) und die zugehörigen gehäuseseitigen Kontakte (12, 12a - 12d) jeweils auf einem gedachten Kreis (K) angeordnet sind, und zwar in gleichmäßigen Winkelabständen um eine Achse (STA) des Kreises (K) verteilt.

3. Elektromotorischer Hilfsantrieb nach Anspruch 1 oder 2,
**dadurch gekennzeichnet, dass** ein Steckergehäuse (8) des Anschlusssteckers (7) mit einem Steckersockel (8.1) ausgebildet ist, der zumindest an einem Anschlussbereich zum Anschließen an das Gehäuse (5) kreisförmig ausgebildet ist, und dass die internen Steckerkontakte (11, 11a -11d) über diesen Anschlussbereich des Steckersockels (8.1) vorstehen.

4. Elektromotorischer Hilfsantrieb nach einem der Ansprüche 1 bis 3,
**dadurch gekennzeichnet, dass** das Gehäuse (5) zum Anschluss an den Anschlussstecker (7) oder dessen Steckersockel (8.1) einen kreisringförmig ausgebildeten Anschlussbereich aufweist, beispielsweise in Form eines kreisringförmigen, über die benachbarte Außenfläche des Gehäuses (5) vorstehenden Sockelabschnitts (14).

5. Elektromotorischer Hilfsantrieb nach Anspruch 4, **dadurch gekennzeichnet,**
**dass** bei mit dem Gehäuse (5) verbundenem Anschlussstecker (7) der Steckersockel (8.1) mit seinem Anschlussbereich den Anschlussbereich (14) am Gehäuse (5) übergreift.

6. Elektromotorischer Hilfsantrieb nach Anspruch 4, **dadurch gekennzeichnet,**
**dass** der Anschlussbereich am Gehäuse (5) den Steckersockel am dortigen Anschlussbereich übergreift.

7. Elektromotorischer Hilfsantrieb nach einem der Ansprüche 1 bis 6, **dadurch gekennzeichnet, dass** zwischen dem Anschlussstecker (7) oder dessen Steckersockel (8.1) und dem Gehäuse (5) eine ringförmige Dichtung (15) vorgesehen ist, die vorzugsweise achsgleich mit derjenigen Achse (STA) angeordnet ist, um die die inneren Steckerkontakte (11, 11a - 11d) und die gehäuseseitigen Kontakte (12, 12a - 12d) verteilt angeordnet ist.

8. Elektromotorischer Hilfsantrieb nach einem der Ansprüche 1 bis 7, **dadurch gekennzeichnet, dass** die Anzahl der gehäuseseitigen Kontakte (12, 12a - 12d) gleich der Anzahl der internen Steckerkontakte (11, 11a - 11d) oder ein ganzzahliges Vielfaches hiervon ist, wobei die Anzahl der internen Steckerkontakte (11, 11a - 11d) und/oder der gehäuseseitigen Kontakte (12, 12a - 12d) beispielsweise drei oder vier oder beispielsweise ein ganzzahliges Vielfaches hiervon ist.

9. Elektromotorischer Hilfsantrieb nach einem der Ansprüche 1 bis 8, **dadurch gekennzeichnet, dass** die internen Steckerkontakte (11, 11a - 11d) und/oder die gehäuseseitigen Kontakte (12, 12a - 12d) jeweils mit wenigstens einem Verriegelungsabschnitt, beispielsweise in Form eines Vorsprungs, einer Ausbuchtung (16), einer Abwicklung (20, 21) oder Ausklinkung versehen sind, der (Verriegelungsabschnitt) nach dem Verbinden des Anschlusssteckers (7) mit dem Gehäuse (5) eine Gegenfläche, vorzugsweise eine von einem gehäuseseitigen Kontakt (12, 12a - 12d) oder von einem internen Steckerkontakt (11, 11a - 11d) gebildete Gegenfläche hintergreift.

10. Elektromotorischer Hilfsantrieb nach einem der Ansprüche 1 bis 9, **dadurch gekennzeichnet, dass** die gehäuseseitigen Kontakte (12d) und/oder die internen Steckerkontakte (11d) jeweils mit wenigstens einem bleibend verformbaren Verriegelungsabschnitt, beispielsweise mit wenigstens einer Lasche (25) ausgebildet sind, der (Verriegelungsabschnitt) zum Verklemmen des jeweiligen internen Steckerkontaktes (11d) oder des jeweiligen gehäuseseitigen Kontaktes (12d) am zugehörigen Gegenkontakt bleibend verformbar ist.

11. Elektromotorischer Hilfsantrieb nach einem der Ansprüche 1 bis 10, **dadurch gekennzeichnet, dass** bei miteinander verbundenen internen Steckerkontakten (11, 11a -11d) und gehäuseseitigen Kontakten (12, 12a - 12d) jeweils ein Kontakt in einer Kontaktöffnung (12.1, 12a.1 - 12d.1) des jeweils anderen Kontaktes (12, 12a - 12d) verspannt aufgenommen ist.

12. Elektromotorischer Hilfsantrieb nach einem der Ansprüche 1 bis 11, **dadurch gekennzeichnet, dass** die gehäuseseitigen Kontakte (12, 12a - 12d) an einem Getriebegehäuse oder dem Gehäusedeckel (5.2) des Getriebegehäuses vorgesehen sind.

13. Elektromotorischer Hilfsantrieb nach einem der Ansprüche 1 bis 12, **dadurch gekennzeichnet, dass** der Anschlussstecker (7) oder dessen Steckergehäuse (8) und/oder das Gehäuse (5) zumindest im Verbindungsbereich oder -abschnitt als Formteile, vorzugsweise als Formteile aus Kunststoff und/oder dass die Steckerkontakte (11, 11a -11d) und/oder die gehäuseseitigen Kontakte (12, 12a - 12d) aus einem metallischen Flachmaterial gefertigt sind.

## Claims

1. Electric motor auxiliary drive for vehicles, having an electric connection plug (7) which is attached to a housing (5) of the auxiliary drive and has outer plug contacts (10) and inner plug contacts (11, 11a - 11d) for connection to housing-side electrical contacts (12, 12a - 12d), and having means for the positively locking connection of the connection plug (7) to the housing (5),
**characterized**
**in that** the means for the positively locking connection of the connection plug (7) of the inner plug contacts (11, 11a - 11d) are formed through interaction with the housing-side contacts (12, 12a - 12d) in the region of a bayonet-like locking arrangement of the connection plug (7) on a housing cover (5.2).

2. Electric motor auxiliary drive according to Claim 1, **characterized in that** the inner plug contacts (11, 11a - 11d) of the connection plug (7) and the associated housing-side contacts (12, 12a - 12d) are each arranged on a virtual circle (K), specifically distributed at equal angular intervals about an axis (STA) of the circle (K).

3. Electric motor auxiliary drive according to Claim 1 or 2,
**characterized in that** a plug housing (8) of the connection plug (7) is embodied with a plug base (8.1) which is embodied in a circular shape at least at a connection region for connecting to the housing (5), and **in that** the internal plug contacts (11, 11a-11d) protrude beyond this connection region of the plug base (8.1) .

4. Electric motor auxiliary drive according to one of Claims 1 to 3, **characterized in that** the housing (5) has, for the purpose of connection to the connection plug (7) or the plug base (8.1) thereof, a connection region which is embodied in a circular ring shape, for example in the form of a circular-ring-shaped base section (14) which protrudes beyond the adjacent external surface of the housing (5).

5. Electric motor auxiliary drive according to Claim 4, **characterized in that** when the connection plug (7) is connected to the housing (5), the plug base (8.1) engages with its connection region over the connection region (14) on the housing (5).

6. Electric motor auxiliary drive according to Claim 4, **characterized in that** the connection region on the housing (5) engages over the plug base on the connection region located there.

7. Electric motor auxiliary drive according to one of Claims 1 to 6, **characterized in that** an annular seal (15) is provided between the connection plug (7) or the plug base (8.1) thereof and the housing (5), which annular seal (15) is preferably arranged coaxially with that axis (STA) around which the internal plug contacts (11, 11a - 11d) and the housing-side contacts (12, 12a-12d) are arranged in a distributed fashion.

8. Electric motor auxiliary drive according to one of Claims 1 to 7, **characterized in that** the number of housing-side contacts (12, 12a - 12d) is equal to the number of internal plug contacts (11, 11a - 11d) or an integral multiple thereof, wherein the number of internal plug contacts (11, 11a - 11d) and/or the housing-side contacts (12, 12a - 12d) is, for example, three or four or, for example, an integral multiple thereof.

9. Electric motor auxiliary drive according to one of Claims 1 to 8, **characterized in that** internal plug contacts (11, 11a - 11d) and/or the housing-side contacts (12, 12a - 12d) are each provided with at least one locking section, for example in the form of a projection, a bulge (16), a protrusion (20, 21) or a notch, which (locking section) engages, after the connection of the connection plug (7) to the housing (5), behind an opposing face, preferably an opposing face which is formed by a housing-side contact (12, 12a - 12d) or by an internal plug contact (11, 11a - 11d).

10. Electric motor auxiliary drive according to one of Claims 1 to 9, **characterized in that** housing-side contacts (12d) and/or the internal plug contacts (11d) are each embodied with at least one continuously deformable locking section, for example at least one clip (25), which (locking section) can be continuously deformed in order to jam the respective internal plug contact (11d) or the respective housing-side contact (12d) on the associated opposing contact.

11. Electric motor auxiliary drive according to one of Claims 1 to 10, **characterized in that** when the internal plug contacts (11, 11a - 11d) and the housing-side contacts (12, 12a - 12d) are connected to one another, in each case one contact is held in a tensioned fashion in a contact opening (12.1, 12a.1 - 12d.1) of the respective other contact (12, 12a - 12d).

12. Electric motor auxiliary drive according to one of Claims 1 to 11, **characterized in that** the housing-side contacts (12, 12a - 12d) are provided on a gearbox housing or on the housing cover (5.2) of the gearbox housing.

13. Electric motor auxiliary drive according to one of Claims 1 to 12, **characterized in that** the connection plug (7) or the plug housing (8) thereof and/or the housing (5) are fabricated, at least in the connection region or section, as moulded parts, preferably as moulded parts made of plastic, and/or **in that** the plug contacts (11, 11a - 11d) and/or the housing-side contacts (12, 12a - 12d) are fabricated from a flat metallic material.

## Revendications

1. Groupe propulseur auxiliaire électromotorisé pour véhicules automobiles, comprenant une fiche de raccordement (7) électrique fixée sur un carter (5) du groupe propulseur auxiliaire, munie de contacts à enficher externes (10) ainsi que de contacts à enficher internes (11, 11a - 11d) destinés au raccordement à des contacts électriques du côté du carter (12, 12a - 12d), et comportant aussi des moyens destinés à l'assemblage par complémentarité de formes de la fiche de raccordement (7) avec le carter (5),
**caractérisé en ce**
**que** les moyens destinés à l'assemblage par complémentarité de formes de la fiche de raccordement (7) sont formés par les contacts à enficher internes (11, 11a - 11d) en coopération avec les contacts du côté du carter (12, 12a - 12d) dans la zone d'un verrouillage par baïonnette de la fiche de raccordement (7) à un couvercle de carter (5.2).

2. Groupe propulseur auxiliaire électromotorisé selon la revendication 1, **caractérisé en ce que** les contacts à enficher internes (11, 11a - 11d) de la fiche de raccordement (7) et les contacts du côté du carter (12, 12a - 12d) associés sont respectivement disposés sur un cercle imaginaire (K), et ce en étant distribués à des écarts angulaires réguliers autour d'un axe (STA) du cercle (K).

3. Groupe propulseur auxiliaire électromotorisé selon la revendication 1 ou 2, **caractérisé en ce qu'**un boitier de fiche (8) de la fiche de raccordement (7) est formé avec une embase de fiche (8.1), laquelle est de configuration circulaire au moins au niveau d'une zone de raccordement servant au raccordement au carter (5) et **en ce que** les contacts à enficher internes (11, 11a - 11d) font saillie au-dessus de cette zone de raccordement de l'embase de fiche (8.1).

4. Groupe propulseur auxiliaire électromotorisé selon l'une des revendications 1 à 3, **caractérisé en ce que** le carter (5) possède une zone de raccordement à configuration en forme d'anneau circulaire servant au raccordement à la fiche de raccordement (7) ou à son embase de fiche (8.1), par exemple sous la forme d'une portion d'embase (14) en forme d'anneau circulaire qui fait saillie au-dessus de la surface extérieure voisine du carter (5).

5. Groupe propulseur auxiliaire électromotorisé selon la revendication 4, **caractérisé en ce que** lorsque la fiche de raccordement (7) est reliée au carter (5), l'embase de fiche (8.1) recouvre avec sa zone de raccordement la zone de raccordement (14) sur le carter (5) .

6. Groupe propulseur auxiliaire électromotorisé selon la revendication 4, **caractérisé en ce que** la zone de raccordement sur le carter (5) recouvre l'embase de fiche au niveau de la zone de raccordement qui s'y trouve.

7. Groupe propulseur auxiliaire électromotorisé selon l'une des revendications 1 à 6, **caractérisé en ce qu'**une garniture d'étanchéité (15) annulaire est disposée entre la fiche de raccordement (7) ou son embase de fiche (8.1) et le carter (5), laquelle est de préférence disposée de manière coaxiale avec l'axe (STA) autour duquel sont distribués les contacts à enficher internes (11, 11a - 11d) et les contacts du côté du carter (12, 12a - 12d).

8. Groupe propulseur auxiliaire électromotorisé selon l'une des revendications 1 à 7, **caractérisé en ce que** le nombre de contacts du côté du carter (12, 12a - 12d) est égal au nombre de contacts à enficher internes (11, 11a - 11d) ou à un multiple entier de celui-ci, le nombre des contacts à enficher internes (11, 11a - 11d) et/ou des contacts du côté du carter (12, 12a - 12d) étant par exemple de trois ou de quatre ou, par exemple, un multiple entier de ceux-ci.

9. Groupe propulseur auxiliaire électromotorisé selon l'une des revendications 1 à 8, **caractérisé en ce que** les contacts à enficher internes (11, 11a - 11d) et/ou les contacts du côté du carter (12, 12a - 12d) sont respectivement pourvus d'au moins une portion de verrouillage, par exemple sous la forme d'une partie saillante, d'une protubérance (16), d'un déroulement (20, 21) ou d'un encochage, laquelle (la portion de verrouillage), après l'assemblage de la fiche de raccordement (7) avec le carter (5), vient en prise par l'arrière avec une surface homologue, de préférence une surface homologue formée par un contact du côté du carter (12, 12a - 12d) ou par un contact à enficher interne (11, 11a - 11d).

10. Groupe propulseur auxiliaire électromotorisé selon l'une des revendications 1 à 9, **caractérisé en ce que** les contacts du côté du carter (12d) et/ou les contacts à enficher internes (11d) sont respectivement formés avec au moins une portion de verrouillage déformable de façon permanente, par exemple avec au moins une languette (25), laquelle (la portion de verrouillage) est déformable de façon permanente en vue de coincer le contact à enficher interne (11d) respectif ou le contact du côté du carter (12d) respectif au niveau du contact homologue associé.

11. Groupe propulseur auxiliaire électromotorisé selon l'une des revendications 1 à 10, **caractérisé en ce que** lorsque les contacts à enficher internes (11, 11a - 11d) et les contacts du côté du carter (12, 12a - 12d) sont reliés entre eux, un contact est respectivement accueilli en étant serré dans une ouverture de contact (12.1, 12a.1 - 12d.1) de l'autre contact (12, 12a - 12d) correspondant.

12. Groupe propulseur auxiliaire électromotorisé selon l'une des revendications 1 à 11, **caractérisé en ce que** les contacts du côté du carter (12, 12a - 12d) se trouvent sur un carter d'engrenage ou le couvercle de carter (5.2) du carter d'engrenage.

13. Groupe propulseur auxiliaire électromotorisé selon l'une des revendications 1 à 12, **caractérisé en ce que** la fiche de raccordement (7) ou son boîtier de fiche (8) et/ou le carter (5), au moins dans la zone ou une portion d'assemblage, sont réalisés sous la forme de pièces moulées, de préférence sous la forme de pièces moulées en matière plastique et/ou **en ce que** les contacts à enficher (11, 11a - 11d) et/ou les contacts du côté du carter (12, 12a - 12d) sont fabriqués dans un matériau plat métallique.
